# EUROPÄISCHE PATENTANMELDUNG

(11) **EP 0 853 978 A2**
(43) Veröffentlichungstag der Anmeldung: **22.07.1998**
(21) Anmeldenummer: 98100385.8
(22) Anmeldetag: 12.01.1998
(51) Int. Cl.: B03B 5/32, B29B 17/02

(54) **Verfahren und Anlage zur Aufbereitung von kunststoffreichen Müllgemischen**

(30) Priorität: 18.01.1997 DE 19701669
(71) Anmelder: KHD Humboldt-Wedag AG, 51103 Köln (DE)
(72) Erfinder: Neureither, Jochen, 69121 Heidelberg (DE)
(74) Vertreter: Christl, Hermann, Dipl.-Ing.

(57) **Zusammenfassung**

Bei der Aufbereitung von kunststoffreichen Müllgemischen, vorzugsweise Verpackungsmüllgemischen aus getrennten Sammlungen, z. B. aus den Bereichen Hausmüll, Gewerbemüll, die vorwiegend Kunststoffe in Form von Folien, Hohlkörpern, Bechern, daneben Verbundstoffe enthalten, wird gemäß der Erfindung verfahrensmäßig vorgeschlagen, nach der Zerkleinerung der kunststoffreichen Müllgemische auf kleiner ca. 12 mm das Müllgemisch in einem Naßsilo (11) zu befeuchten, anschließend mechanisch aufzuschließen und dann in einer Sortierzentrifuge (19) nach der Dichte zu trennen, wobei eine verschmutzungsfreie Kunststofffraktion erhalten wird.

## Beschreibung

Die Erfindung betrifft ein Verfahren und eine Anlage zur Aufbereitung von kunststoffreichen Müllgemischen, vorzugsweise Verpackungsmüllgemischen aus getrennten Sammlungen, z. B. aus den Bereichen Hausmüll, Gewerbemüll, die vorwiegend Kunststoffe in Form von Folien, Hohlkörpern, Bechern, daneben Verbundstoffe enthalten und die unter anderem mit mineralischen Schwerstoffen wie beispielsweise Sanden oder Metallresten verunreinigt sind.

Zur Aufbereitung solcher vielfältiger Abfallgemische im technischen Maßstab mit dem Ziel der Rückgewinnung sortenreiner Kunststoffe als Sekundärrohstoffe sind Verfahren bekannt, bei denen nasse Aufbereitungsschritte durchgeführt werden. Bei diesen bekannten Verfahren wird in mehreren Verfahrensschritten eine Anreicherung der zu gewinnenden Kunststofffraktionen angestrebt und daran anschließend eine Trennung nach der Dichte herbeigeführt.

So wird in der WO-91/04100 ein Verfahren und eine Vorrichtung zur Trennung von Kunststoffen nach ihrer Dichte (Schwimm-Sink-Scheidung) beschrieben, wobei die zu trennenden Stoffe an einem Ende eines eckigen länglichen Behälters aufgegeben werden und ein Schwimmgut am anderen Ende des Behälters abgezogen wird. Nachteilig bei diesem bekannten Verfahren sind die aufwendige Konstruktion der Trennvorrichtung sowie die mangelnde Trennschärfe infolge von Turbulenzen, die durch ein Förderband in der Trennflüssigkeit hervorgerufen werden.

Eine deutliche Verbesserung des Trennergebnisses bei der Trennung nach der Dichte wird in der aus der DE-A-42 08 104 bekannten Vorrichtung erzielt, wobei die aus den zu trennenden Feststoffen sowie einer Trennflüssigkeit bestehende Suspension einer rotierenden Zentrifuge mittig aufgegeben und an den beiden Enden der Zentrifuge die zu trennenden Feststoffe, weitgehend getrennt von der Trennflüssigkeit, ausgetragen werden. Obwohl die Trennung nach der Dichte in dieser bekannten Sortierzentrifuge weitgehend optimal durchgeführt werden kann, ist als Voraussetzung eine den zu trennenden Stoffen angepaßte Vorbehandlung unabdingbar. Bei Stoffgruppen, die durch entsprechende Aufbereitungsschritte erhalten werden, wie beispielsweise
- mit Papier verunreinigten Kunststoffen,
- mit Holz verunreinigten Kunststoffen,
- Verbundstoffen (Kunststoff/Papier),
- Kunststoffen mit stark anhaftenden Verschmutzungen, welche sich mit Wasser ablösen lassen,
werden nach den z. Zt. bekannten Verfahren mit großem apparativen Aufwand und unbefriedigendem Ergebnis Friktionsabscheider, Turbotrockner, Vorwaschbecken und Silos in unterschiedlicher Reihenfolge hintereinandergeschaltet, bevor der eigentliche Trennvorgang stattfindet. So werden beispielsweise Friktionsabscheider vor einem Feuchtsilo eingesetzt, was jedoch nur geringe Wirkung erzielt, da das Material vor dem Friktionsabscheider nur ungenügend eingeweicht wird. Selbst vorgeschaltete Schwimm-Sink-Becken als Vorwascheinrichtungen erfüllen nicht den gewünschten Einweicheffekt, da die Verweilzeit von ca. 0,1 bis 2 Min. (je nach Länge und Ausführung der Becken) zu kurz ist.

Nach anschließender Trennung (Schwimm-Sink-Verfahren oder Hydrozyklonverfahren) muß zusätzlich noch eine Abtrennung der Trennflüssigkeit in einem nachgeschalteten Friktions- oder Turbotrockner vorgenommen werden.

Es ist Aufgabe der Erfindung, die Aufbereitung von kunststoffreichen Müllgemischen so zu verbessern, daß der maschinelle Aufwand bei der Vorbereitung zur Trennung nach der Dichte deutlich reduziert und die Vorbereitung dabei so optimiert wird, daß eine deutliche Verbesserung des Trennergebnisses erreicht wird.

Die gestellte Aufgabe wird gemäß der Erfindung verfahrensmäßig mit den Maßnahmen des Kennzeichnungsteils des Anspruchs 1 und vorrichtungsmäßig mit den Merkmalen des Kennzeichnungsteils des Asnpruchs 5 gelöst. Vorteilhafte Ausgestaltungen der Erfindung sind in den Unteransprüchen angegeben.

Durch das Verfahren gemäß der Erfindung wird die Aufbereitung von Kunststoffen, die durch vorangehende Verfahrensschritte von den übrigen Bestandteilen, die in den Müllgemischen enthalten sein können, abgetrennt wurden, die aber noch mit Papier, Holz oder sonstigen Stoffen verunreinigt bzw. verschmutzt sind, oder die Papier in Form von Verbundstoffen enthalten, auf das Ziel einer sortenreinen Trennung durch eine diesen Stoffgruppe optimal angepaßte Vorbereitung ausgerichtet.

Das Verfahren gemäß der Erfindung gliedert sich hierbei in die drei hintereinandergeschalteten Abschnitte:
- Einweichen,
- Aufschließen,
- Trennen,
wobei aber die Grenzen zwischen den beiden ersten Abschnitten fließend verlaufen, denn während des Einweichens findet bereits ein teilweiser Aufschluß statt.

Damit Einweichen und Aufschluß erfolgreich durchgeführt werden können, ist es zunächst erforderlich, das kunststoffreiche Müllgemisch mittels einer Schneidvorrichtung, beispielsweise einer Schneidmühle bekannter Bauart, auf eine Schnitzelgröße von etwa 10 bis 12 mm zu zerkleinern, um möglichst viele freiliegende Schnittkanten zu erzeugen.

Die Erzeugung möglichst vieler freiliegender Schnittkanten sowie die geringe Größe des zerkleinerten kunststoffreichen Müllgemisches (verunreinigte Kunststoffschnitzel) ermöglicht beim nachfolgenden Einweichen in einem Naßsilo, in dem die Kunststoffschnitzel über eine Verweilzeit von vorzugsweise 60 Min. mit Wasser oder mit Wasserdampf behandelt werden, daß beim Eindringen von Feuchtigkeit über die Schnittfläche in die Kunststoffschnitzel nur kurze Wege zu überwinden sind, um die Kunststoffschnitzel in der zur Verfügung stehenden Verweilzeit vollständig zu durchweichen. Die Durchweichung geschieht also nicht nur überwiegend über die Basisflächen der Kunststoffschnitzel, sondern auch über viele freiliegende Schnittkanten, wodurch insbesondere bei Verbundstoffen (mit Kunststoff beschichtetem Papier oder bei "inmould labels") die Feuchtigkeit in die vorhandenen Zwischenräume an den Schnittkanten eindringen und einzelne Schichten unterwandern kann. Der Wasser- und/oder Wasserdampfzusatz in das Naßsilo wird dabei so dosiert geregelt, daß eine Feuchte von vorzugsweise 30 bis 40 % des zerkleinerten Müllgemisches erhalten wird.

Damit in der zur Verfügung stehenden Verweilzeit im Naßsilo die zugeführte Feuchte auch optimal von den Kunststoffschnitzeln aufgenommen werden kann, ist innerhalb des Naßsilos mindestens eine Mischvorrichtung, vorzugsweise eine Mischschnecke, angeordnet, durch die eine ständige intensive Durchmischung der eingetragenen Materialien erfolgt.

Nach dem Einweichverfahren gemäß der Erfindung in einem Naßsilo erfolgt als weiterer Verfahrensschritt das Aufschließen der eingeweichten Kunststoffschnitzel mit gleichzeitiger mechanischer Entwässerung und Abtrennung eines Teils der Verunreinigungen. Hierzu wird das eingeweichte Material aus dem Naßsilo beispielsweise mittels einer Austragsschnecke in einen Friktionstrockner gefördert. In diesem mechanischen Trockner wird das eingeweichte Material von einem schnellumlaufenden Rotor (ca. 1000 Min.⁻¹) mehrmals gegen einen Siebkorb geschleudert und dabei bei gleichzeitiger Entwässerung mechanisch stark durch Friktion beansprucht. Infolge dieser mechanischen Beanspruchung werden eingeweichte Verunreinigungen von den Kunststoffschnitzeln abgelöst und anhaftendes Papier aufgefasert und gleichzeitig abgelöst. Ein Teil dieser abgelösten Verunreinigungen bzw. Papierfasern wird bei der gleichzeitigen Abtrennung der Feuchtigkeit mit dem abgetrennten Wasser aus dem Trockner ausgetragen, während der restliche Teil dieser unerwünschten Fremdstoffe gemeinsam mit den Kunststoffschnitzeln in einen Anmaischbehälter gefördert werden. Bewährt hat sich hier eine pneumatische Förderung.

Die Mischung aus Kunststoffschnitzel und Verunreinigungen, die bei intensiver ausreichend langer mechanischen Behandlung im Friktionstrockner nicht mehr miteinander verbunden, sondern frei nebeneinander vorliegen, werden nun im Anmaischbehälter mit der Trennflüssigkeit intensiv vermischt, um eine homogene Suspension aus den zu trennenden Feststoffen und der Trennflüssigkeit herzustellen und um noch letzte Anhaftungen von Verunreinigungen von den Kunststoffschnitzeln abzulösen. Bewährt hat sich hier eine Mischdauer durch Rühren von 2 bis 3 Min..

Als Trennflüssigkeit kommt üblicherweise Wasser zur Anwendung, wenn als Trenngrenze eine Dichte von 1,0 g/cm³ ausreicht. Es können aber auch andere Trennflüssigkeiten eingesetzt werden, wenn Trenndichten größer oder kleiner als 1,0 g/cm³ erforderlich sind, beispielsweise Salzlösungen für eine Trenndichte größer 1,0 g/cm³ oder Alkohole für eine Trenndichte kleiner 1,0 g/cm³.

Aus dem Anmaischbehälter wird die Suspension dann zur Trennung, dem letzten Verfahrensschritt nach dem Aufschließen, in die Trennvorrichtung gefördert. Gemäß der Erfindung ist diese Trennvorrichtung eine Sortierzentrifuge, in der eine Trennung der Feststoffe im Zentrifugalfeld nach der Dichte bei gleichzeitiger Abtrennung der Trennflüssigkeit erfolgt, so daß die voneinander getrennten Feststoffe weitgehend trocken aus der Trennzentrifuge ausgetragen werden. Als Sortierzentrifuge kann beispielsweise die aus der DE-A-42 08 104 bekannte Trennvorrichtung verwendet werden. Da bei derartigen Sortierzentrifugen die Trennung bei hohen Beschleunigungen (1000 bis 1200fache Erdbeschleunigung) bzw. hohen Zentrifugendrehzahlen stattfindet, wobei sich ein ungefähr mit Zentrifugendrehzahl umlaufender Suspensionsring innerhalb der Zentrifugentrommel aufbaut, wird die aus dem Anmaischbehälter in die Sortierzentrifuge geförderte Suspension innerhalb von Sekundenbruchteilen auf die Geschwindigkeit dieses umlaufenden Suspensionsrings, beispielsweise auf ca. 50 bis 60 m/s, beschleunigt. Durch diese hohe Geschwindigkeitszunahme der Suspension bei ihrem Eintritt in die Sortierzentrifuge findet erneut eine mechanische Beanspruchung durch Friktion statt, durch die bisher noch nicht freigelegte Komponente jetzt aufgeschlossen und letzte Anhaftungen von Verunreinigungen endgültig von den Kunststoffschnitzeln entfernt werden.

Die Abtrennung dieser letzten Verunreinigungen von den Kunststoffschnitzeln nach der Dichte, wobei die Verunreinigungen als Schwerfraktion erhalten werden, geschieht aufgrund der hohen Kräfte, die bei einer 1000 bis 1200fachen Erdbeschleunigung auf die Feststoffteilchen einwirken, vollständiger und auch zuverlässiger als bei bekannten Trennverfahren, wie beispielsweise bei Schwimm-Sink-Verfahren oder Hydrozyklonverfahren. Die Reinheit sowie die Trennschärfe ist dabei deutlich besser als bei den bekannten Verfahren mit dem zusätzlichen Vorteil, daß die Kunststoffschnitzel als Leichtfraktion und die Verunreinigungen als Schwerfraktion, bereits abgetrennt von der Trennflüssigkeit, aus der Sortierzentrifuge ausgetragen werden und eine zusätzliche mechanische Entwässerung nicht mehr benötigt wird.

Ein weiterer Vorteil des Verfahrens gemäß der Erfindung besteht darin, daß durch den relativ einfachen Verfahrensweg wenig Feinanteile entstehen, die sonst später bei der Trennung nur schwierig und mit großem Aufwand zu erfassen sind und die zu einem hohen Verlust an Wertprodukt Kunststoff (bei bekannten Verfahren bis zu 10 %) und somit zu einer Belastung des abgetrennten Wassers führen.

Durch die im wesentlichen gemäß der Erfindung aus den Anlagenteilen Zerkleinerung, Naßsilo, Friktionstrockner und Sortierzentrifuge aufgebaute Anlage ist das Verfahren gemäß der Erfindung in der Lage, in einfacher und kompakter Weise - da nur wenige Einzelmaschinen eingesetzt werden - unter günstigen Betriebskosten mit hoher Verfügbarkeit eine Trennung kunststoffreicher Müllgemische mit optimaler Trennschärfe durchzuführen.

Weitere Einzelheiten, Vorteile und Merkmale der Erfindung werden nachfolgend anhand eines Verfahrensschemas eines Ausführungsbeispieles näher erläutert.

Das Fließschema, das in der Zeichnungsfigur den Verfahrensweg von links nach rechts beschreibt, beginnt mit der Zuführung 10 der bereits vorsortierten und auf eine Größe von 10 bis 12 mm zerkleinerten kunststoffreichen Müllgemische (verunreinigte Kunststoffschnitzel) in das Naßsilo 11 (die im Naßsilo vorhandene Mischvorrichtung ist nicht dargestellt). In dieses Naßsilo 11 werden über entsprechende Zuleitungen 12 Wasser und/oder Wasserdampf eingeleitet, um das Einweichen der verunreinigten Kunststoffschnitzel durchzuführen.

Über eine Austragsvorrichtung 24 wird das eingeweichte Material in einen Friktionstrockner 13 gefördert, in dem der Aufschluß der verunreinigten Kunststoffschnitzel bei gleichzeitiger Abtrennung einer Teilmenge 25 des mit Schmutzstoffen angereicherten Einweichwassers erfolgt. Aus dem Friktionstrockner werden die mechanisch entwässerten Feststoffe - die Kunststoffschnitzel sowie die nun weitgehend frei vorliegenden Verunreinigungen - nun pneumatisch mittels eines entsprechenden Gebläses 14 in den Anmaischbehälter 15 gefördert, in dem eine intensive Durchmischung mit der Trennflüssigkeit durch beispielsweise einem Rührer erfolgt.

Aus dem Anmaischbehälter 15 wird über eine Pumpe 23 und Leitung 16 die Suspension, bestehend aus den zu trennenden Feststoffen und der Trennflüssigkeit, in die Sortierzentrifuge 19 gefördert. Hier findet die Trennung der Verunreinigungen von den Kunststoffschnitzeln sowie die Abtrennung der Trennflüssigkeit von den getrennten Feststoffteilchen statt. Die von den vorher anhaftenden Fremdstoffen befreiten Kunststoffschnitzel werden als Leichtfraktion 21 an einem Ende der Sortierzentrifuge 19 und die abgetrennten Fremdstoffe (Verschmutzungen Papier usw.) als Schwerfraktion 20 am anderen Ende der Sortierzentrifuge 19 ausgetragen. Die abgetrennte Trennflüssigkeit verläßt in diesem Anwendungsbeispiel die Sortierzentrifuge 19 mittig, gelangt in einen Vorlagebehälter 18 und wird von dort über eine Leitung 17 zum Anmaischbehälter 15 zurückgeführt, so daß die Trennflüssigkeit im geschlossenen Kreislauf geführt wird und nur die Menge an Trennflüssigkeit ersetzt werden muß, die mit den Feststoffen die Sortierzentrifuge verläßt. Es ist aber auch möglich, statt des mittigen Austrags die Trennflüssigkeit an einem Ende der Sortierzentrifuge austreten zu lassen, getrennt von oder gemeinsam mit der an diesem Ende dort austretenden Feststofffraktion.

Das Verfahren der Erfindung ist nicht an das in der Zeichnungsfigur dargestellte Anlagenschema gebunden, sondern je nach den zu trennenden Feststoffbestandteilen können die einzelnen Maschinen sowie die diese verbindenden Fördermittel den Bedürfnissen entsprechend angepaßt und abgeändert werden, solange der Gegenstand der Erfindung, ausgehend von der gestellten Aufgabe, mit den erfindungsgemäßen hintereinander geschalteten Verfahrensschritten Einweichen, Aufschließen und Trennen erhalten bleibt.

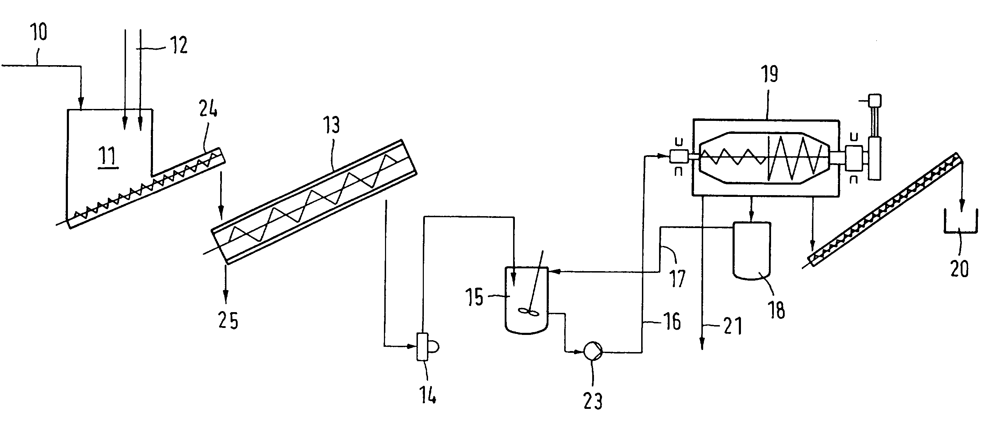

## Patentansprüche

1. Verfahren zur Aufbereitung von kunststoffreichen Müllgemischen, vorzugsweise Verpackungsmüllgemischen aus getrennten Sammlungen, z. B. aus den Bereichen Hausmüll, Gewerbemüll, die vorwiegend Kunststoffe in Form von Folien, Hohlkörpern, Bechern, daneben Verbundstoffe enthalten und die unter anderem mit mineralischen Schwerstoffen wie beispielsweise Sanden oder Metallresten verunreinigt sind, gekennzeichnet durch folgende miteinander verknüpfte Verfahrensschritte:
a) Zerkleinerung der Müllgemische auf kleiner 12 mm durch eine Schneidzerkleinerung;
b) Behandlung des zerkleinerten Müllgemisches unter Umwälzung in einem Naßsilo (11) über eine Verweildauer von 30 bis 80 Min. mit Wasser und/oder Dampf, wobei eine Feuchte von 20 bis 60 % eingestellt wird;
c) mechanische Entwässerung des nach b) behandelten Müllgemisches mit gleichzeitiger Friktionsbehandlung und Abtrennung eines Teils der Feuchte sowie der der Verunreinigungen;
d) Anmaischen des entwässerten Produktes aus c) über einen Zeitraum von 1 bis 10 Min. mit einer Trennflüssigkeit (17);
e) Dichtesortierung des Anmaischproduktes aus d) im Zentrifugalfeld einer Sortierzentrifuge (19).

2. Verfahren nach Anspruch 1, dadurch gekennzeichnet, daß die Zerkleinerung nach dem Verfahrensschritt a) so durchgeführt wird, daß möglichst viele freiliegende Schnittkanten geschaffen werden, in die die Feuchtigkeit während der Behandlung im Naßsilo [Verfahrensschritt b)] eindringt.

3. Verfahren nach Anspruch 1 oder 2, dadurch gekennzeichnet, daß die mechanische Entwässerung bei gleichzeitiger Friktionsbehandlung [Verfahrensschritt c)] in einem Friktionstrockner (13) bei einer Rotordrehzahl von etwa 1000 Min.⁻¹ durchgeführt wird.

4. Verfahren nach Anspruch 1, 2 oder 3, dadurch gekennzeichnet, daß die im Verfahrensschritt e) abgetrennte Trennflüssigkeit (17) im geschlossenen Kreislauf zum Anmaischen [Verfahrensschritt d)] zurückgeführt wird.

5. Anlage zur Aufbereitung von kunststoffreichen Müllgemischen zur Durchführung des Verfahrens nach einem oder mehreren der vorhergehenden Ansprüche, gekennzeichnet durch folgende hintereinander geschaltete Anlagenteile:
- eine Schneidmühle, in die das Müllgemisch auf eine Teilchengröße von kleiner 12 mm zerkleinert wird;
- ein Naßsilo (11) zur Befeuchtung des zerkleinerten Müllgemisches mit Wasser und/oder Wasserdampf;
- ein Friktionstrockner (13) mit einem schnellumlaufenden Rotor mit 1000 Min.⁻¹;
- eine Sortierzentrifuge (19) aus der die Feststoffe sortiert in zwei Fraktionen (20, 21) unterschiedlicher Dichte und getrennt von der Trennflüssigkeit (17) ausgetragen werden.

6. Anlage nach Anspruch 5, dadurch gekennzeichnet, daß innerhalb des Naßsilos (11) mindestens eine Mischvorrichtung, vorzugsweise eine Mischschnecke, zur Umwälzung des zerkleinerten Müllgemisches angeordnet ist.
